# EUROPEAN PATENT SPECIFICATION

(11) **EP 3 716 029 B1**
(45) Date of publication and mention of the grant of the patent: **28.01.2026**
(21) Application number: 19212208.3
(22) Date of filing: 28.11.2019
(51) Int. Cl.: G06F 3/04883, G06F 3/0482, G06F 3/0483, G06F 3/0485

(54) **INTERFACE DISPLAY METHOD, DEVICE AND STORAGE MEDIUM**
SCHNITTSTELLENANZEIGEVERFAHREN, VORRICHTUNG UND SPEICHERMEDIUM
DISPOSITIF D'AFFICHAGE D'INTERFACE ET SUPPORT D'INFORMATIONS

(30) Priority: 28.03.2019 CN 201910245550
(43) Date of publication of application: 30.09.2020
(73) Proprietor: Beijing Xiaomi Mobile Software Co., Ltd., Beijing 100085 (CN)
(72) Inventor: WANG, Ying, Beijing, Beijing 100085 (CN)
(74) Representative: dompatent

(56) References cited:
- EP-A1- 3 416 045
- WO-A1-2017/218153
- US-A1- 2009 282 022
- US-A1- 2010 060 586
- US-A1- 2015 277 747
- US-A1- 2015 309 689
- US-A1- 2016 092 100
- US-A1- 2016 360 336
- JORDAN MIERA: "The ultimate guide to Google Now cards | Android Central", 5 September 2014 (2014-09-05), XP055279344, Retrieved from the Internet <URL:http://www.androidcentral.com/ultimate-guide-google-now-cards> [retrieved on 20160609]

## Description

### TECHNICAL FIELD

The present disclosure relates to the field of computer technologies, and more particularly, to an interface display method, device and storage medium.

### BACKGROUND

With the intelligent development and the gradual functions improvement of electronic devices, more and more information needs to be displayed on electronic devices. In order to improve the display effect and realize information integration, a specified interface is currently provided, on which multiple types of information can be aggregated for display.

WO 2017/218153 A1 shows navigating between a lock interface and a specified interface by means of a swiping gesture on the user interface of a mobile electronic device.

### SUMMARY

In order to overcome the problems in the related art, the present disclosure provides an interface display method, device and storage medium according to claims 1, 5 and 9 respectively.

According to the interface display method, device and storage medium provided by embodiments of the present disclosure, the specified interface including at least one information display area is displayed, when the first gesture operation is detected in the specified interface, the target information display area corresponding to the first gesture operation is determined, and the detail interface associated with the target information display area is displayed. In this way, the user only needs to trigger the first gesture operation at any position on the specified interface to display the detail interface associated with the corresponding target information display area, without having to find an entry of the detail interface on the specified interface and then perform a click operation on the entry. Thus, it enables a faster access to the detail interface with simplified user operations.

Moreover, the specified interface may be returned upon receiving the second gesture operation triggered by the user on the detail interface, thereby achieving fast switching and improving operation efficiency of the user.

In addition, by displaying the search area for triggering information search function on the specified interface in a floating way, when the specified interface changes, display of the search area may not change with the change of the specified interface, and the search can be performed based on the search area, thereby achieving a search mode more conveniently. Moreover, the search result may be adjusted according to the information in the specified interface during the search, thus the search result related to the information in the specified interface is more easily obtained, and search requirement of the user is fully satisfied.

### BRIEF DESCRIPTION OF THE DRAWINGS

The accompanying drawings herein are incorporated into the specification and constitute a part thereof, illustrating embodiments consistent with the disclosure and being used to, in combination with the specification, explain the principles of the disclosure.
FIG. 1 is a flowchart of an interface display method according to an aspect of the disclosure;
FIG. 2 is a flowchart of an interface display method according to an aspect of the disclosure;
FIG. 3 is a schematic diagram of a specified interface according to an aspect of the disclosure;
FIG. 4 is a schematic diagram of a first detail interface according to an aspect of the disclosure;
FIG. 5 is a schematic diagram of a second detail interface according to an aspect of the disclosure;
FIG. 6 is a flowchart of an interface display method according to an aspect of the disclosure;
FIG. 7 is a schematic diagram of a first interface layer and a second interface layer according to an aspect of the disclosure;
FIG. 8 is a block diagram of an interface display device according to an aspect of the disclosure;
FIG. 9 is a block diagram of an interface display device according to another aspect of the disclosure; and
FIG. 10 is a block diagram of an electronic device according to an aspect of the disclosure.

### DETAILED DESCRIPTION

The technical solutions in the embodiments of the present disclosure are clearly and completely described in the following with reference to the accompanying drawings in the embodiments of the present disclosure. It is obvious that the described embodiments are a part of the embodiments of the present disclosure, and not all of the embodiments. All other embodiments obtained by those skilled in the art without creative work based on embodiments of the present disclosure will fall within protection scope of the present disclosure.

The embodiments of the present disclosure will be further described in detail below with reference to the accompanying drawings.

Exemplary embodiments will be described in detail herein, examples of which are illustrated in the accompanying drawings. The following description refers to the same or similar elements in the different figures unless otherwise indicated. The embodiments described in the following exemplary embodiments do not represent all embodiments consistent with the present disclosure. Instead, they are merely examples of devices and methods consistent with aspects of the present disclosure as detailed in the appended claims.

Before explaining the embodiments of the present disclosure in detail, interfaces involved in the embodiments of the present disclosure will be briefly introduced.

1. Main interface: an interface automatically displayed when an electronic device is turned on or unlocked.

The main interface may include application icons of a plurality of applications, and the user may trigger any application icon to launch an application corresponding to the application icon. The main interface may further include a background image, which is used as a wallpaper to enhance the display effect of the main interface, and the background image may be automatically set by the electronic device or set by a user. The main interface may also include information commonly used by the user, such as current time information, network connection, and the like.

2. Specified interface: a specific information display interface of the electronic device, which may be used for aggregating and displaying various types of information.

The specified interface may refer to interfaces other than the main interface of the electronic device and application interfaces of installed applications, such as the left-one-screen interface (also referred to as the negative-one-screen interface). The left-one-screen interface may be the leftmost information display interface among the plurality of information display interfaces, which may be invoked by a rightward sliding operation performed on the main interface.

The specified interface may include multiple display areas, such as a display area, a shortcut function area, and a dynamic information area. The display area may be used to display some common information, such as time information, weather information, and the like. The shortcut function area may be used to display multiple function options, such as startup options of an application, startup options of a certain application interface in the application, and startup options of a tool, for example, a start-up option of the scan function. The dynamic information area may be used to display recommended dynamic information, such as popular merchandises, train tickets, movie tickets, schedule information, stock quotes, travel strategies, and so on.

3. Detail interface: an interface associated with a certain information display area in the specified interface.

In the information display area of the specified interface, some type of information may be displayed, but the information displayed is limited due to the limited size of the information display area. Therefore, the information display area is associated with the detail interface, and more information can be displayed in the detail interface than in the information display area.

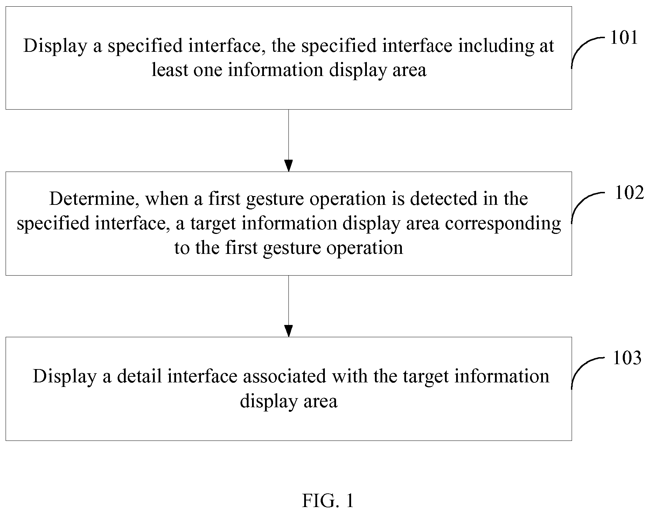

FIG. 1 is a flowchart of an interface display method according to an aspect of the disclosure, which may be applied in an electronic device. As shown in FIG. 1, the method may include the following steps.

In step 101, a specified interface is displayed, the specified interface including at least one information display area. The specified interface may be displayed in full-screen mode to occupy the full screen of the electronic device.

In step 102, when a first gesture operation is detected in the specified interface, a target information display area corresponding to the first gesture operation is determined.

In step 103, a detail interface associated with the target information display area is displayed. The detail interface may be displayed in full-screen mode to occupy the full screen of the electronic device.

According to the interface display method provided by embodiments of the present disclosure, the specified interface including at least one information display area is displayed, when the first gesture operation is detected in the specified interface, the target information display area corresponding to the first gesture operation is determined, and the detail interface associated with the target information display area is displayed. In this way, the user only needs to trigger the first gesture operation at any position on the specified interface to display the detail interface associated with the corresponding target information display area, without having to find an entry of the detail interface on the specified interface and then perform a click operation on the entry. Thus, it enables a faster access to the detail interface with simplified user operations.

In one or more embodiments, the specified interface is displayed, including at least one information display area. When the first gesture operation is detected in the specified interface, the target information display area corresponding to the first gesture operation is determined, and the detail interface associated with the target information display area is displayed.

In one or more embodiments, the determining, when the first gesture operation is detected in the specified interface, the target information display area corresponding to the first gesture operation, and displaying the detail interface associated with the target information display area includes:
when a first sliding operation is detected, a first information display area corresponding to the first sliding operation is determined, the first information display area being used for displaying a function option; and
a first detail interface associated with the first information display area is displayed, the number of function options in the first detail interface being greater than the number of function options in the first information display area.

In one or more embodiments, the determining, when the first gesture operation is detected in the specified interface, the target information display area corresponding to the first gesture operation, and displaying the detail interface associated with the target information display area includes:
when a second sliding operation is detected, a second information display area corresponding to the second sliding operation is determined, the second information display area being used for displaying dynamic information; and
a second detail interface associated with the second information display area is displayed, the dynamic information in the second detail interface being more than the dynamic information in the second information display area.

In one or more embodiments, the specified interface is displayed when a second gesture operation is detected in the detail interface. Alternatively, the specified interface is displayed when a confirmation operation corresponding to a return option is detected, the return option being included in the detail interface.

In one or more embodiments, a search area is displayed on the specified interface in a floating way, the search area being used for triggering an information search function.

In one or more embodiments, when a search instruction is received based on the search area, a search result is acquired according to information in the specified interface; and the search result is displayed on the specified interface.

All of the above optional technical solutions may be combined to form an optional embodiment of the present disclosure, and will not be further described herein.

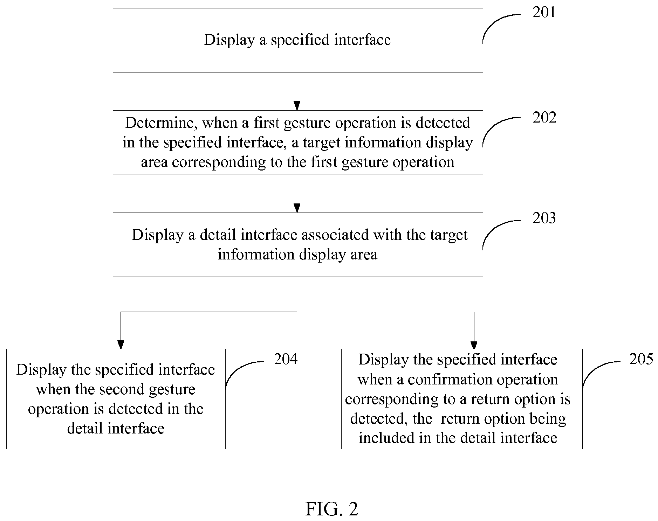

FIG. 2 is a flowchart of an interface display method according to an aspect of the disclosure, which may be applied to an electronic device, such as a mobile phone, a personal computer, a tablet computer and the like. As shown in FIG. 2, the method includes the following steps.

In step 201, a specified interface is displayed. Here, the specified interface includes at least one information display area, and one or more types of information may be displayed by each information display area, thus multiple types of information may be aggregated and displayed in the specified interface.

In one or more embodiments, the specified interface includes at least one of a first information display area, a second information display area, and a third information display area, and the content displayed by each display area is different from each other.

1. The first information display area. It may be referred to as a shortcut function area.

The first information display area may be used for displaying one or more function options for the user to operate.

The function options may include a startup option of an application, a startup option of an application interface, and a startup option of a tool.

Here, the startup option of the application is used to launch the application, which may include the application icon or startup button of the application. When the user triggers the startup option, the electronic device may launch the application.

The startup option of the application interface is used to start the application interface, and the application interface may include an interface running in an operating system of the electronic device, or an interface running in a third-party application. For example, it may be a permission setting interface running in the operating system, or may be a chat interface in a chat application. When the user triggers the startup option, the electronic device may start the application interface, that is, the application interface may be directly displayed without displaying the main interface or other interfaces of the application to which the application interface belongs.

The startup option of the tool is used to launch the tool, which may include scan, calculator, alarm, memo and the like. When the user triggers the startup option, the tool may be launched.

2. The second information display area. It may be referred to as a dynamic information area.

The dynamic information area may be used to display dynamic information recommended by the electronic device for the user, such as popular news, popular merchandise, train tickets, movie tickets, schedule information, stock quotes, travel strategies, and the like. The user may view the dynamic information, and may also trigger the dynamic information to enter a display interface of the dynamic information. The display interface may include description information of the dynamic information, such that the user can learn details of the dynamic information in the display interface, and may further trigger one or more operations to process objects involved in the dynamic information.

For example, the dynamic information may be a popular merchandise. The user may click on the popular merchandise to enter a display interface of the popular merchandise, and the display interface may include description information on various aspects for describing the merchandise, such as type, price, size, and style of the popular merchandise. The user may view the description information and may also trigger an operation to purchase the merchandise.

The recommended dynamic information may be updated over time or according to an operation triggered by the user. The electronic device may update the displayed dynamic information in the second information display area to display the updated dynamic information.

3. The third information display area. It may be referred to as a display area. The third information display area may be used to display information commonly used by the user, such as time information, weather information, and number of motion steps. The types of information displayed in the third information display area may be set by the electronic device by default or set by the user.

It should be noted that other information display areas may be included in the specified interface, and other types of information may also be displayed, but details thereof are not described herein. Moreover, the information in the specified interface may be provided by an operating system of the electronic device, or provided by a third-party application installed on the electronic device, or may be provided through other channels. By integrating the information provided by one or more channels, and displaying the same in different areas in the specified interface, aggregation display of various types of information is realized, rationality is ensured, and it is convenient for uniform view of the user.

In an embodiment, when the specified interface includes a plurality of information display areas, the plurality of information display areas may be arranged in a predetermined manner, and the predetermined manner is not limited in this embodiment.

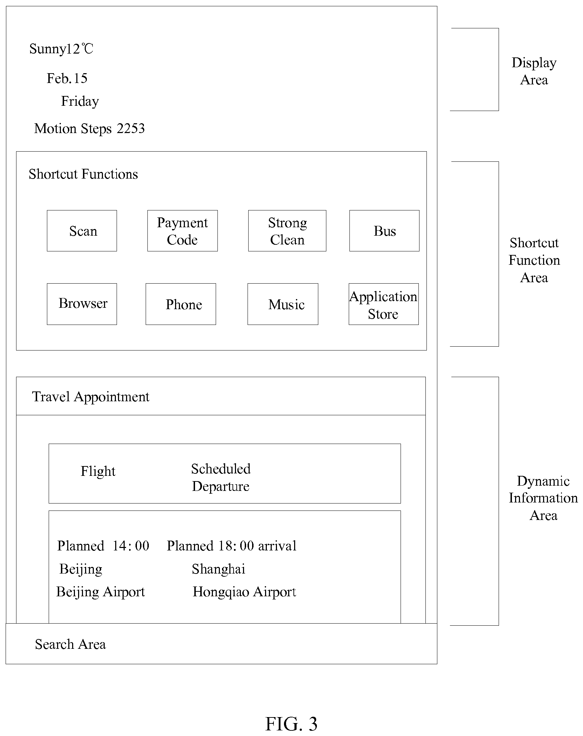

As shown in FIG. 3, the specified interface includes the display area, the shortcut function area, and the dynamic information area, and the three information display areas are arranged in order from top to bottom. Here, the shortcut function area may be the first information display area. The dynamic information area may be the second information display area.

In addition, following embodiments will be described on how to trigger the display of the specified interface.

In one or more embodiments, the specified interface is a left-one-screen interface, which is located at the left side of the main interface. When the electronic device displays the main interface, upon detection a rightward sliding operation, the specified interface is displayed. Optionally, the specified interface may be located at the right side of the main interface. When the electronic device displays the main interface, upon detection a leftward sliding operation, the specified interface is displayed. In another possible embodiment, the electronic device is provided with a preset button, which may be a physical button or a virtual button, and when a triggering operation on the preset button is detected, the specified interface is displayed.

By adopting the above trigger mode, the specified interface may be called out by one operation, thereby enabling the user to quickly view the information displayed on the specified interface with convenient operation.

In step 202, when the first gesture operation is detected in the specified interface, the target information display area corresponding to the first gesture operation is determined.

In the specified interface, each information display area has a limited size and may only display limited information. Accordingly, at least one information display area may also be associated with its corresponding detail interface, and more information is displayed in the detail interface for the user to view. In order to call out the detail interface more quickly and conveniently, the first gesture operation on the specified interface may be designated to call up the detailed interface associated with the corresponding target information display area.

The first gesture operation is a sliding operation, including an upward sliding operation, a downward sliding operation, a leftward sliding operation, a rightward sliding operation, or a sliding operation following a fixed track. A correspondence between sliding operations and the information display areas is pre-stored in the electronic device. When the sliding operation is detected in the specified interface, the target information display area corresponding to the sliding operation is determined, by querying the correspondence based on the sliding operation, as the information display area corresponding to which the user desires to view the detail interface.

The sliding operation may include a first sliding operation and a second sliding operation. When the first sliding operation is detected, the target information display area corresponding to the first sliding operation is determined as the first information display area. When the second sliding operation is detected, the target information display area corresponding to the second sliding operation is determined as the second information display area.

In one or more embodiments, the correspondence between sliding operations and the information display areas includes a correspondence between directions of sliding operation and the information display areas. That is, the electronic device sets a corresponding direction for each information display area associated with the detailed interface in the specified interface, thereby establishing the correspondence between directions of sliding operation and the information display areas. When a sliding operation is detected, the target information display area corresponding to the direction of the sliding operation is determined.

For example, when the first sliding operation is detected, the direction of the first sliding operation is determined as the first direction, and the target information display area corresponding to the first direction is determined as the first information display area. When the second sliding operation is detected, the direction of the second sliding operation is determined as the second direction, and the target information display area corresponding to the second direction is determined as the second information display area.

The first direction may be different from the second direction. For example, the first direction is upward, the second direction is downward; or, the first direction is downward, and the second direction is upward.

In one or more embodiments, the correspondence between sliding operations and the information display areas includes a correspondence between trajectories of sliding operation and the information display areas. That is, the electronic device sets a corresponding trajectory for each information display area associated with the detailed interface in the specified interface, thereby establishing the correspondence between trajectories of the sliding operation and the information display areas. When a sliding operation is detected, the target information display area corresponding to the trajectory of the sliding operation is determined.

For example, when the first sliding operation is detected, the trajectory of the first sliding operation is determined as the first trajectory, and the target information display area corresponding to the first trajectory is determined as the first information display area. When the second sliding operation is detected, the trajectory of the second sliding operation is determined as the second trajectory, and the target information display area corresponding to the second trajectory is determined as the second information display area.

For example, the first trajectory may be a circular trajectory and the second trajectory may be a " √" trajectory.

In addition, the first gesture operation may also include other types of operations, such as a long press operation, a double click operation, a click operation, and the like.

In one or more embodiments, the electronic device stores a correspondence between types of the gesture operation and the information display areas. When the first gesture operation is detected in the specified interface, the target information display area corresponding to the type of the first gesture operation may be determined, by querying the correspondence based on the type of the first gesture operation. Also, the electronic device may determine the target information display area corresponding to the first gesture operation in other manners, and details are not described herein again.

In step 203, the detail interface associated with the target information display area is displayed.

In one or more embodiments, when determining that the target information display area is the first information display area, the electronic device switches from displaying the specified interface to displaying the first detail interface associated with the first information display area.

The number of function options in the first detail interface is greater than the number of function options in the first information display area. The electronic device may set a plurality of function options, determine a sequence of the plurality of function options, and display a preset number of function options in the first information display area according to the sequence, and display the preset number of function options as well as remaining function options in the first detail interface. The user may view a part of the function options in the first information display area. When more function options are to be viewed, the first sliding operation may be triggered, and the electronic device is triggered to display the first detail interface, such that more function options may be viewed in the first detail interface. The preset number may be determined according to the size of each function option and the size of the first information display area.

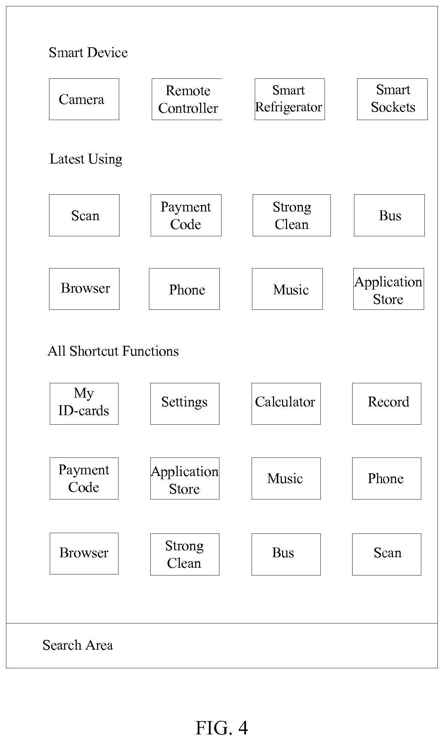

Based on the example of FIG. 3, when the electronic device displays the specified interface, if the user triggers an upward sliding operation, indicating that the user desires to view the first detail interface of the shortcut function area, the electronic device displays the first detail interface as shown in FIG. 4.

During the process of displaying the first detail interface, the user may view multiple function options displayed in the first detail interface, and may also trigger any of the function options. When the user triggers a startup option of a certain application, the electronic device launches the application. In addition, all the function options may be displayed at the same time in the first detail interface, such that the user can view all the function options at the same time. Optionally, not every function option is displayed at the same time in the first detail interface, such that the user may view more function options in the first detail interface by sliding the first detail interface with an upward sliding operation or a downward sliding operation triggered in the first detail interface.

In one or more embodiments, when determining that the target information display area is the second information display area, the electronic device switches from displaying the specified interface to displaying the second detail interface associated with the second information display area, where the dynamic information in the second detail interface is more than the dynamic information in the second information display area.

The electronic device may acquire multiple pieces of dynamic information, determine a sequence of the multiple pieces of dynamic information, display top ranked dynamic information in the second information display area according to the sequence, and display the top ranked dynamic information as well as remaining dynamic information in the second detail interface. The user may view a part of the dynamic information in the second information display area. When the user desires to view more dynamic information, the second sliding operation is triggered, and the electronic device is triggered to display the second detail interface, such that the user may view more dynamic information in the second detail interface. The number of pieces of dynamic information displayed in the second information display area may be determined according to the size of the dynamic information and the size of the second information display area.

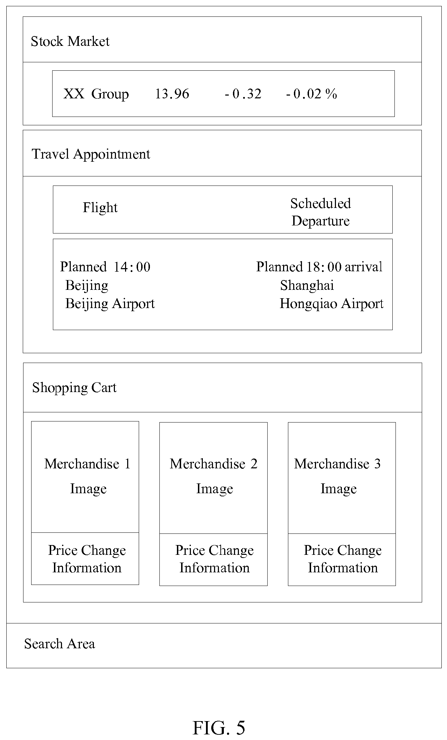

Based on the example of FIG. 3, when the electronic device displays the specified interface, if the user triggers a downward sliding operation, indicating that the user desires to view the second detail interface of the dynamic information area, the electronic device displays the second detail interface as shown in FIG. 5.

During the process of displaying the second detail interface, the user may view multiple pieces of dynamic information displayed in the second detail interface, and may also trigger any piece of dynamic information. When the user triggers a certain popular news, the electronic device displays a web page corresponding to the popular news. In addition, all the dynamic information may be displayed at the same time in the second detail interface, such that the user can view all the dynamic information at the same time. Optionally, not every dynamic information is displayed at the same time in the second detail interface, such that the user may view more dynamic information in the second detail interface by sliding the second detail interface with an upward sliding operation or a downward sliding operation triggered in the second detail interface.

In addition, when switching from the specified interface to the detail interface, a dynamic effect of switching from the specified interface to the detail interface may be displayed, so as to enrich the display form.

The dynamic effect may be as follows. An area of the target information display area is gradually expanded until the target information display area spreads over the entire specified interface, so as to obtain an effect of the detail interface. The user may intuitively understand the detail interface of which target information display area is currently entered by viewing the dynamic effect.

It should be noted that, compared with displaying the detail interface by triggering a specific entry, the first gesture operation in this embodiment may be performed at any position on the specified interface. In this way, the user only needs to trigger the first gesture operation on the specified interface to display the corresponding detail interface, without having to care the position of triggering the first gesture operation or find an entry of the detail interface on the specified interface before performing a click operation on the entry. Thus, it enables a faster access to the detail interface with simplified user operations.

When the detail interface is displayed, the electronic device may also switch from displaying the detail interface to displaying the specified interface. A switching process may include the following steps 204 or 205.

In step 204, when the second gesture operation is detected in the detail interface, the specified interface is displayed.

The second gesture operation may be a sliding operation. When the sliding operation is detected in the detail interface, the specified interface is displayed. The sliding operation may include an upward sliding operation, a downward sliding operation, a leftward sliding operation, a rightward sliding operation, or a sliding operation following a fixed trajectory, such as a circular trajectory or a " √ " trajectory.

In order to avoid conflicts between displaying the specified interface by sliding operation and sliding the detail interface up and down by sliding operation, in one or more embodiments, all the information may be displayed at the same time in the detail interface, thus the user is no longer required to slide the detail interface by any sliding operation. Accordingly, when the user triggers the sliding operation in the detail interface, the specified interface may be displayed directly.

In one or more embodiments, not every piece of information can be displayed in the detail interface at the same time, and it needs to be displayed in multiple pages. Accordingly, the detail interface may include a first area and a second area. When a sliding operation is detected in the first area, the detail interface may be slid up and down according to the sliding operation. When another sliding operation is detected in the second area, the specified interface may be displayed, thereby achieving a control scheme based on divided areas.

In one or more embodiments, the second gesture operation is related to the first gesture operation. For example, both the first gesture operation and the second gesture operation are sliding operations, and a direction of the first gesture operation is opposite to or the same as that of the second gesture operation.

In addition, the second gesture operation may also include other types of operations, such as long press operation, double click operation, click operation, and the like.

In step 205, the detail interface includes a return option, and when a confirmation operation corresponding to the return option is detected, the specified interface is displayed.

The return option may be located anywhere in the detail interface. In order not to affect the display of information on the detail interface, the return option may be located at the top or bottom of the detail interface. The return option may be located at a fixed position on the detail interface. After viewing the information displayed on the detail interface, the user may trigger the confirmation operation of the return option, and the electronic device returns to the specified interface upon detecting the confirmation operation.

In one or more embodiments, the electronic device may be further provided with a return button, which is a physical button located below the display screen. When the user triggers a confirmation operation on the return button, the electronic device may return to the specified interface upon detecting the confirmation operation.

According to the interface display method provided by embodiments of the present disclosure, the specified interface including at least one information display area is displayed, when the first gesture operation is detected in the specified interface, the target information display area corresponding to the first gesture operation is determined, and the detail interface associated with the target information display area is displayed. In this way, the user only needs to trigger the first gesture operation at any position on the specified interface to display the detail interface associated with the corresponding target information display area, without having to find an entry of the detail interface on the specified interface and then perform a click operation on the entry. Thus, it enables a faster access to the detail interface with simplified user operations.

Moreover, the specified interface may be returned upon receiving the second gesture operation triggered by the user on the detail interface, thereby achieving fast switching and improving operation efficiency of the user.

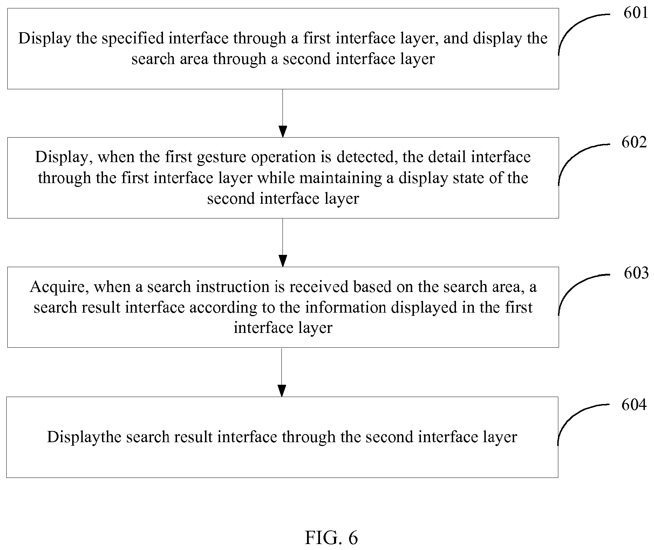

FIG. 6 is a flowchart of an interface display method according to an aspect of the disclosure, which may be applied to an electronic device. As shown in FIG. 6, the method includes the following steps.

In step 601, the specified interface is displayed through a first interface layer, the search area is displayed through a second interface layer, and the second interface layer is located above the first interface layer.

The display interface of the electronic device includes the first interface layer for displaying the specified interface, and the second interface layer for displaying the search area. In one or more embodiments, the search area is used to trigger an information search function, and a size the search area is smaller than that of the specified interface.

In one or more embodiments, the first interface layer and the second interface layer are equal in size, and the search area may be located at the top or bottom of the second interface layer. The second interface layer may be in a transparent state. Optionally, the search area in the second interface layer may be in a non-transparent state, and the area other than the search area may be in the transparent state, so as to avoid occluding information on the specified interface and causing a relatively great impact on displaying of the specified interface. As shown in FIG. 3, the search area is located at the bottom of the second interface layer.

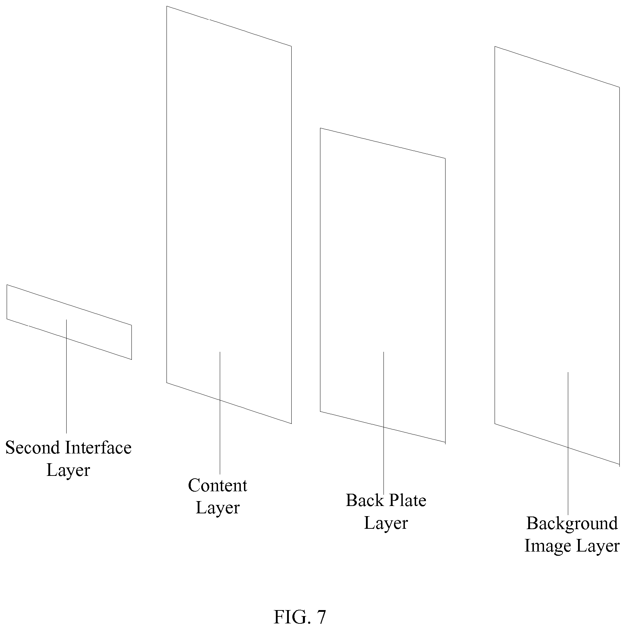

In one or more embodiments, as shown in FIG. 7, the first interface layer includes a content layer, a back plate layer, and a background image layer, the back plate layer is located below the content layer, and the background image layer is located below the back plate layer. The content layer is used to display the display elements in the interface, the back plate layer has a preset color, and the background image layer is used to display a background image. Moreover, the background image of the background image layer may be the same as that of the main interface of the electronic device, and may be used as a wallpaper of the electronic device. The back plate layer and the background image layer are combined to serve as a background for the display elements.

When the specified interface is displayed through the first interface layer, the display elements of the specified interface are displayed in the content layer, and the specified interface is formed by a combination of the display elements of the specified interface, the preset color of the back plate layer, and the background image in the background image layer.

It should be noted that when the specified interface is displayed, any operation triggered by the user in the area other than the search area may be treated as the operation triggered on the first interface layer, and does not affect the display of the second interface layer. For example, in the specified interface, the user clicks on a function option of a certain application, the electronic device may display an application interface of the application, and the display position of the search area remains unchanged.

In step 602, when the first gesture operation is detected, the detail interface is displayed through the first interface layer while maintaining a display state of the second interface layer.

When detecting the first gesture operation, the electronic device determines the target information display area corresponding to the first gesture operation, displays the detail interface associated with the target information display area through the first interface layer, and maintains the display state of the second interface layer, In other words, after switching to display of the detail interface, the search area in the first interface layer is still in the display state, as shown in FIG. 4 and FIG. 5.

When the detail interface is displayed, any operation triggered by the user in the area other than the search area may be treated as the operation triggered on the first interface layer, and does not affect the display of the second interface layer. For example, in the second detail interface associated with the dynamic information area, the user slides the second detail interface up and down, the second detail interface is slid up and down in the first interface layer, and the display position of the search area remains unchanged.

In one or more embodiments, when the second gesture operation is detected in the detail interface, the specified interface is displayed through the first interface layer while maintaining display state of the second interface layer, thereby returning to the specified interface.

In step 603, when a search instruction is received based on the search area, a search result interface is acquired according to the information displayed in the first interface layer.

The user may input any keyword(s) to be searched in the search area by means of voice input, text input and the like, and trigger a search instruction carrying the keyword(s). When receiving the search instruction, the electronic device performs a search according to the keyword(s) to obtain a plurality of search results, sorts the plurality of search results according to the information displayed in the current first interface layer, and generates the search result interface according to the sorted order.

In one or more embodiments, multiple search results may be sorted according to a matching degree between each search result and the keyword, and then the multiple search results as sorted may be adjusted according to a correlation degree between the each search result and the information displayed in the first interface layer. Optionally, multiple search results may be sorted according to a correlation degree between each search result and the information displayed in the first interface layer, and then the multiple search results as sorted may be adjusted according to a matching degree between the each search result and the keyword.

With the above sorting method, the search results related to the information displayed in the first interface layer may be preferentially displayed as much as possible.

For example, the second detail interface is displayed in the first interface layer, and the second detail interface displays flight information from Beijing to New York, indicating departure from Beijing at 7:51 on March 16 and arrival at New York at 9:30 on March 17. When the user enters the keyword "New York" in the search area, the electronic device searches according to the keyword "New York", and displays search results such as weather information of New York on March 17 and information of New York Airport as being top ranked in the search result interface, so as to meet the needs of users as much as possible.

In step 604, the search result interface is displayed through the second interface layer.

When the electronic device obtains the search result interface, the search result interface may be displayed through the second interface layer, and the search result interface may cancel the display of the search area, or may also maintain the display state of the search area.

For example, the second interface layer may display the search area with a relatively small size. When the electronic device acquires the search result interface, the size of the second interface layer may be increased, and the search area may be displayed at the top of the second interface layer, while multiple search results may be displayed below the search area.

The user can view each search result on the search result page, and view details of any search result by clicking on the search result.

It should be noted that, in the process of displaying the search result interface through the second interface layer, the display state of the first interface layer may be also maintained. When an operation of closing the search result interface is detected, or an operation of clicking on the area where the first interface layer is located is detected from the user, the search result interface may be closed, and the search area may be redisplayed through the second interface layer, so as to enable the user to operate the first interface layer.

It should be also noted in the embodiment that, the specified interface is displayed through the first interface layer and the search interface is displayed through the second interface layer. In this manner, the search area can be displayed by the electronic device on the specified interface in a floating way.

In one or more embodiments, the electronic device may further display the search area on the specified interface in the floating way through other manners. When receiving the search instruction based on the search area, the search result may be obtained according to the information in the specified interface, and then displayed on the specified interface.

The displaying of search result on the specified interface may include following steps. The information displayed in the specified interface may be replaced with the obtained search result, thereby displaying the search result on the specified interface. Optionally, the search result interface may be generated according to the obtained search result, and then displayed on the specified interface in a floating way. Subsequently, the search result interface may be closed and the specified interface may be displayed again.

In addition, when the electronic device detects the first gesture operation on the specified interface, the corresponding detail interface is displayed while maintaining the display state of the search area, so that the search area may be displayed on the detail interface in the floating way. When the search instruction is received based on the search area, the search result may be obtained according to the information in the detail interface, and then displayed on the detail interface.

The displaying of search result on the detail interface may include following steps. The information displayed in the detail interface may be replaced with the obtained search result, thereby displaying the search result on the detail interface. Optionally, the search result interface may be generated according to the obtained search result, and then displayed on the detail interface in a floating way. Subsequently, the search result interface may be closed and the detail interface may be displayed again.

According to the interface display method provided by embodiments of the present disclosure, by displaying the search area for triggering information search function on the specified interface in a floating way, when the specified interface changes, display of the search area may not change with the change of the specified interface, and the search can be performed based on the search area, thereby achieving a search mode more conveniently. Moreover, the search result may be adjusted according to the information in the specified interface during the search, thus the search result related to the information in the specified interface is more easily obtained, and search requirement of the user is fully satisfied.

Moreover, the specified interface is displayed through the first interface layer, and the search area is displayed through the second interface layer. Thus, a hierarchical display of the interface and the search area is realized, so that the display of the search area may not change with the change of the interface.

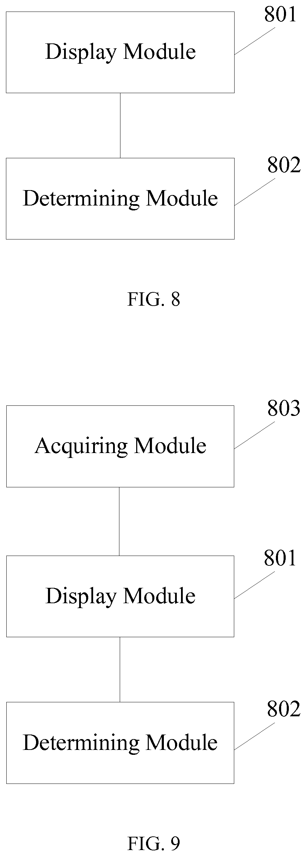

FIG. 8 is a block diagram of an interface display device according to an aspect of the disclosure. As shown in FIG. 8, the apparatus includes a display module 801 and a determining module 802.

The display module 801 is configured to display a specified interface, the specified interface including at least one information display area.

The determining module 802 is configured to determine, when a first gesture operation is detected in the specified interface, a target information display area corresponding to the first gesture operation.

The display module 801 is further configured to display a detail interface associated with the target information display area.

According to the interface display device provided by embodiments of the present disclosure, the specified interface including at least one information display area is displayed, when the first gesture operation is detected in the specified interface, the target information display area corresponding to the first gesture operation is determined, and the detail interface associated with the target information display area is displayed. In this way, the user only needs to trigger the first gesture operation at any position on the specified interface to display the detail interface associated with the corresponding target information display area, without having to find an entry of the detail interface on the specified interface and then perform a click operation on the entry. Thus, it enables a faster access to the detail interface with simplified user operations.

In one or more embodiments, the determining module 802 is configured to determine, when a first sliding operation is detected, a first information display area corresponding to the first sliding operation, the first information display area being used for displaying a function option.

The display module 801 is configured to display a first detail interface associated with the first information display area, a number of function options in the first detail interface being greater than a number of function options in the first information display area.

In one or more embodiments, the determining module 802 is configured to determine, when a second sliding operation is detected, a second information display area corresponding to the second sliding operation, the second information display area being used for displaying dynamic information.

The display module 801 is configured to display a second detail interface associated with the second information display area, the dynamic information in the second detail interface being more than the dynamic information in the second information display area.

In one or more embodiments, the display module 801 is further configured to display the specified interface when a second gesture operation is detected in the detail interface.

Or, the display module 801 is further configured to display the specified interface when a confirmation operation corresponding to a return option is detected, the return option being included in the detail interface.

In one or more embodiments, the display module 801 is further configured to display a search area on the specified interface in a floating way, the search area being used for triggering an information search function.

In one or more embodiments, as shown in FIG. 9, the device further includes an acquiring module 803.

The acquiring module 803 is configured to acquire, when a search instruction is received based on the search area, a search result according to information in the specified interface.

The display module 801 is configured to display the search result on the specified interface.

According to the interface display device provided by embodiments of the present disclosure, the specified interface may be returned upon receiving the second gesture operation triggered by the user on the detail interface, thereby achieving fast switching and improving operation efficiency of the user.

In addition, by displaying the search area for triggering information search function on the specified interface in a floating way, when the specified interface changes, display of the search area may not change with the change of the specified interface, and the search can be performed based on the search area, thereby achieving a search mode more conveniently. Moreover, the search result may be adjusted according to the information in the specified interface during the search, thus the search result related to the information in the specified interface is more easily obtained, and search requirement of the user is fully satisfied.

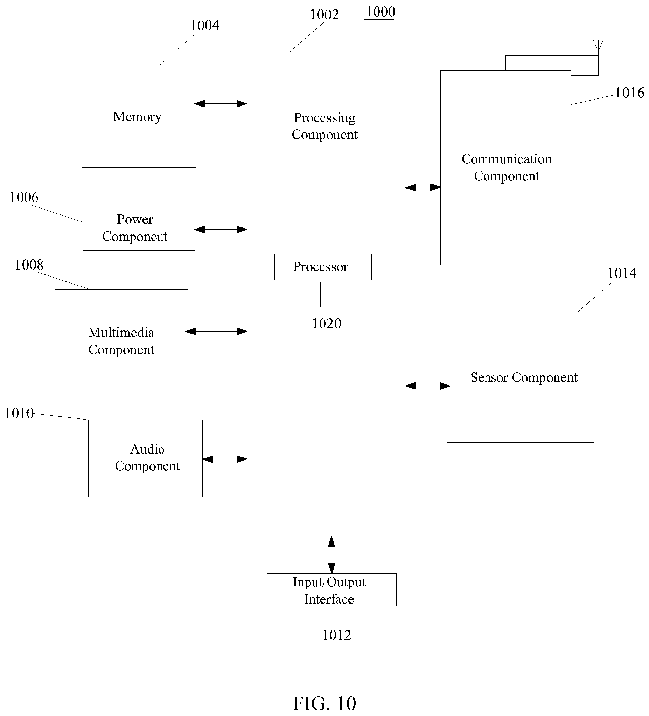

FIG. 10 is a block diagram of an electronic device 1000 according to an aspect of the disclosure. For example, the electronic device 1000 may be a mobile phone, a computer, a game console, a tablet device, a medical device, a fitness device, a personal digital assistant, and the like.

Referring to FIG. 10, the electronic device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the electronic device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components For instance, the processing component 1002 may include a multimedia module to facilitate the interaction between the multimedia component 1008 and the processing component 1002.

The memory 1004 is configured to store various types of data to support the operation of the electronic device 1000. Examples of such data include instructions for any applications or methods operated on the electronic device 1000, various types of data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the electronic device 1000. The power component 1006 may include a power management system, one or more power sources, and any other components associated with the generation, management, and distribution of power in the electronic device 1000.

The multimedia component 1008 includes a screen providing an output interface between the electronic device 1000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1008 includes a front camera and/or a rear camera. When the electronic device 1000 is in an operation mode, such as a shooting mode or a video mode, the front camera and/or the rear camera can receive external multimedia data. Each of the front and rear camera may be a fixed optical lens system or have focal length and optical zoom capabilities.

The audio component 1010 is configured to output and/or input audio signals. For example, the audio component 1010 includes a microphone ("MIC") configured to receive an external audio signal when the electronic device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like.

The sensor component 1014 includes one or more sensors to provide status assessments of various aspects of the electronic device 1000. For instance, the sensor component 1014 may detect an open/closed status of the electronic device 1000, relative positioning of components, e.g., the display and the keypad, of the electronic device 1000, a change in position of the electronic device 1000 or a component of the electronic device 1000, a presence or absence of user contact with the electronic device 1000, an orientation or an acceleration/deceleration of the electronic device 1000, and a change in temperature of the electronic device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an acceleration sensor, a gyroscope sensor, a magnetic sensor, a pressure sensor, or a temperature sensor. The sensor component 1014 may also include a fingerprint recognition sensor.

The communication component 1016 is configured to facilitate communication, wired or wirelessly, between the electronic device 1000 and other devices. The electronic device 1000 can access a wireless network based on a communication standard, such as Wi-Fi, 2G, or 3G, or a combination thereof. In one aspect of the disclosure, the communication component 1016 receives a broadcast signal or broadcast associated information from an external broadcast management system via a broadcast channel. In one aspect of the disclosure, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the electronic device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the forgoing interface display method.

In an exemplary embodiment, there is also provided a non-transitory computer readable storage medium comprising instructions, such as a memory 1004 including instructions executable by processor 1020 of electronic device 1000 to perform the above method. For example, the non-transitory computer readable storage medium may be a ROM, a random access memory (RAM), a CD-ROM, a magnetic tape, a floppy disk, and an optical data storage device.

Those skilled in the art may understand that all or part of the steps of implementing the above embodiments may be completed by hardware, or may be instructed by a program to execute related hardware, and the program may be stored in a machine readable storage medium. The above mentioned storage medium may be a read only memory, a magnetic disk or an optical disk or the like.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within prior art. It is intended that the specification and embodiments be considered as exemplary only, with a scope of the present disclosure being indicated by the following claims.

It will be appreciated that the present disclosure is not limited to the exact construction that has been described above and illustrated in the accompanying drawings, and that various modifications and changes can be made without departing from the scope thereof. The scope of the present disclosure is only restricted by the appended claims.

## Claims

1. A computer implementing method for interface processing, comprising:
displaying (101, 201, 601) a specified interface through a first interface layer, the specified interface being invoked by a rightward sliding operation performed on a main interface and comprising multiple information display areas, wherein the main interface is an interface automatically displayed when an electronic device is turned on or unlocked, a correspondence between different trajectories of sliding operations and the multiple information display areas is pre-stored, and the different trajectories comprises different sliding directions and different sliding paths;
displaying (601) a search area through a second interface layer, wherein the second interface layer is located above the first interface layer and the search area is used to trigger an information search function;
determining (102, 202), in response to detecting a sliding operation in the specified interface, a target information display area corresponding to the sliding operation based on a trajectory of the sliding operation and the correspondence, and displaying (103, 203, 602), through the first interface layer, a detail interface associated with the target information display area while maintaining a display state of the second interface layer; and
acquiring (603), when a search instruction is received based on the search area, a search result interface according to information displayed in the first interface layer, and displaying (604) the search result interface through the second interface layer,
wherein the detail interface is to be displayed in multiple pages, the detail interface comprises a first area and a second area, and the method further comprises:
sliding, in response to detecting a third sliding operation in the first area, the detail interface up and down according to the third sliding operation; and
displaying, in response to detecting a fourth sliding operation in the second area, the specified interface.

2. The method according to claim 1, wherein the determining (102, 202), in response to detecting the first gesture operation in the specified interface, the target information display area corresponding to the first gesture operation, and displaying (103, 203, 602) the detail interface associated with the target information display area, comprises:
determining, in response to detecting a first sliding operation, a first information display area corresponding to the first sliding operation, the first information display area being used for displaying a function option; and
displaying a first detail interface associated with the first information display area, a number of function options in the first detail interface being greater than a number of function options in the first information display area.

3. The method according to claim 1, wherein the determining (102, 202), in response to detecting the first gesture operation in the specified interface, the target information display area corresponding to the first gesture operation, and displaying (103, 203, 602) the detail interface associated with the target information display area, comprises:
determining, in response to detecting a second sliding operation, a second information display area corresponding to the second sliding operation, the second information display area being used for displaying dynamic information; and
displaying a second detail interface associated with the second information display area, the dynamic information in the second detail interface being more than the dynamic information in the second information display area.

4. The method according to claim 1, further comprising:
displaying (204) the specified interface in response to detecting a second gesture operation in the detail interface; or
displaying (205) the specified interface in response to detecting a confirmation operation corresponding to a return option, the return option being comprised in the detail interface.

5. An interface display device, comprising:
a display module (801), configured to display a specified interface through a first interface layer, the specified interface being invoked by a rightward sliding operation performed on a main interface and comprising multiple information display areas, and display a search area through a second interface layer, wherein the main interface is an interface automatically displayed when an electronic device is turned on or unlocked, a correspondence between different trajectories of sliding operations and the multiple information display areas is pre-stored, the different trajectories comprise different sliding directions and different sliding paths, and the second interface layer is located above the first interface layer and the search area is used to trigger an information search function;
a determining module (802), configured to determine, in response to detecting a sliding operation in the specified interface, a target information display area corresponding to the sliding operation based on a trajectory of the sliding operation and the correspondence,
wherein the display module (801) is further configured to display, through the first interface layer, a detail interface associated with the target information display area while maintaining a display state of the second interface layer; and
acquiring, when a search instruction is received based on the search area, a search result interface according to information displayed in the first interface layer, and displaying the search result interface through the second interface layer,
wherein the detail interface is to be displayed in multiple pages, the detail interface comprises a first area and a second area, and the display module (801) is further configured to:
slide, in response to detecting a third sliding operation in the first area, the detail interface up and down according to the third sliding operation; and
display, in response to detecting a fourth sliding operation in the second area, the specified interface.

6. The device according to claim 5, wherein,
the determining module (802) is configured to determine, in response to detecting a first sliding operation, a first information display area corresponding to the first sliding operation, the first information display area being used for displaying a function option;
the display module (801) is configured to display a first detail interface associated with the first information display area, a number of function options in the first detail interface being greater than a number of function options in the first information display area.

7. The device according to claim 5, wherein,
the determining module (802) is configured to determine, in response to detecting a second sliding operation, a second information display area corresponding to the second sliding operation, the second information display area being used for displaying dynamic information;
the display module (801) is configured to display a second detail interface associated with the second information display area, the dynamic information in the second detail interface being more than the dynamic information in the second information display area.

8. The device according to claim 5, wherein,
the display module (801) is further configured to display the specified interface in response to detecting a second gesture operation in the detail interface; or
the display module (801) is further configured to display the specified interface in response to detecting a confirmation operation corresponding to a return option, the return option being comprised in the detail interface.

9. A computer readable storage medium storing at least one instruction, the at least one instruction configured to, when being loaded and executed by one or more processors, implement operations performed in the interface display method according to any one of claims 1-4.

## Patentansprüche

1. Computerimplementierungsverfahren zur Schnittstellenverarbeitung, das umfasst:
Anzeigen (101, 201, 601) einer spezifizierten Schnittstelle durch eine erste Schnittstellenschicht, wobei die spezifizierte Schnittstelle durch einen nach rechts gerichteten Schiebevorgang aufgerufen wird, die auf einer Hauptschnittstelle durchgeführt wird und mehrere Informationsanzeigebereiche umfasst, wobei die Hauptschnittstelle eine Schnittstelle ist, die automatisch angezeigt wird, wenn eine elektronische Vorrichtung eingeschaltet oder entsperrt wird, wobei eine Entsprechung zwischen verschiedenen Trajektorien von Schiebevorgängen und den mehreren Informationsanzeigebereichen vorgespeichert ist und die verschiedenen Trajektorien verschiedene Schieberichtungen und verschiedene Schiebepfade aufweisen;
Anzeigen (601) eines Suchbereichs durch eine zweite Schnittstellenschicht, wobei sich die zweite Schnittstellenschicht über der ersten Schnittstellenschicht befindet und der Suchbereich zum Auslösen einer Informationssuchfunktion verwendet wird; Bestimmen (102, 202), als Reaktion auf das Erfassen eines Schiebevorgangs in der spezifizierten Schnittstelle, eines Ziel-Informationsanzeigebereichs, der dem Schiebevorgang entspricht, basierend auf einer Trajektorie des Schiebevorgangs und der Entsprechung, und Anzeigen (103, 203, 602) einer Detailschnittstelle, die mit dem Ziel-Informationsanzeigebereich verbunden ist, durch die erste Schnittstellenschicht, während ein Anzeigezustand der zweiten Schnittstellenschicht beibehalten wird; und
Erfassen (603), wenn eine Suchanweisung auf der Grundlage des Suchbereichs empfangen wird, einer Suchergebnisschnittstelle gemäß den in der ersten Schnittstellenschicht angezeigten Informationen, und
Anzeigen (604) der Suchergebnisschnittstelle durch die zweite Schnittstellenschicht, wobei die Detailschnittstelle in mehreren Seiten angezeigt werden soll, wobei die Detailschnittstelle einen ersten Bereich und einen zweiten Bereich aufweist, und wobei das Verfahren ferner umfasst:
Schieben, als Reaktion auf das Erkennen eines dritten Schiebevorgangs in dem ersten Bereich, der Detailschnittstelle entsprechend dem dritten Schiebevorgang nach oben und unten; und
Anzeigen, als Reaktion auf das Erkennen eines vierten Schiebevorgangs in dem zweiten Bereich, der spezifizierten Schnittstelle.

2. Verfahren nach Anspruch 1, wobei das Bestimmen (102, 202), als Reaktion auf das Erfassen der ersten Gestenbetätigung in der spezifizierten Schnittstelle, des Ziel-Informationsanzeigebereichs, welcher der ersten Gestenbetätigung entspricht, und das Anzeigen (103, 203, 602) der Detailschnittstelle, die mit dem Ziel-Informationsanzeigebereich verbunden ist, umfasst:
Bestimmen, als Reaktion auf das Erkennen eines ersten Schiebevorgangs, eines ersten Informationsanzeigebereichs, der dem ersten Schiebevorgang entspricht, wobei der erste Informationsanzeigebereich zur Anzeige einer Funktionsoption verwendet wird; und
Anzeigen einer ersten Detailschnittstelle, die mit dem ersten Informationsanzeigebereich verbunden ist, wobei eine Anzahl von Funktionsoptionen in der ersten Detailschnittstelle größer ist als eine Anzahl von Funktionsoptionen in dem ersten Informationsanzeigebereich.

3. Verfahren nach Anspruch 1, wobei das Bestimmen (102, 202), als Reaktion auf das Erfassen der ersten Gestenbetätigung in der spezifizierten Schnittstelle, des Ziel-Informationsanzeigebereichs, welcher der ersten Gestenbetätigung entspricht, und das Anzeigen (103, 203, 602) der Detailschnittstelle, die mit dem Ziel-Informationsanzeigebereich verbunden ist, umfasst:
Bestimmen, als Reaktion auf das Erkennen eines zweiten Schiebevorgangs, eines zweiten Informationsanzeigebereichs, der dem zweiten Schiebevorgang entspricht, wobei der zweite Informationsanzeigebereich zur Anzeige von dynamischen Informationen verwendet wird; und
Anzeigen einer zweiten Detailschnittstelle, die mit dem zweiten Informationsanzeigebereich verbunden ist, wobei die dynamischen Informationen in der zweiten Detailschnittstelle mehr sind als die dynamischen Informationen in dem zweiten Informationsanzeigebereich.

4. Verfahren nach Anspruch 1, ferner umfassend:
Anzeigen (204) der spezifizierten Schnittstelle als Reaktion auf das Erkennen einer zweiten Gestenbedienung in der Detailschnittstelle; oder
Anzeigen (205) der spezifizierten Schnittstelle als Reaktion auf das Erkennen eines Bestätigungsvorgangs, der einer Rückkehroption entspricht, wobei die Rückkehroption in der Detailschnittstelle enthalten ist.

5. Schnittstellenanzeigevorrichtung, die aufweist:
ein Anzeigemodul (801), das dazu ausgebildet ist, eine spezifizierte Schnittstelle durch eine erste Schnittstellenschicht anzuzeigen, wobei die spezifizierte Schnittstelle durch einen nach rechts gerichteten Schiebevorgang aufgerufen wird, die auf einer Hauptschnittstelle durchgeführt wird und mehrere Informationsanzeigebereiche umfasst, und einen Suchbereich durch eine zweite Schnittstellenschicht anzuzeigen, wobei die Hauptschnittstelle eine Schnittstelle ist, die automatisch angezeigt wird, wenn eine elektronische Vorrichtung eingeschaltet oder entsperrt wird, wobei eine Entsprechung zwischen verschiedenen Trajektorien von Schiebevorgängen und den mehreren Informationsanzeigebereichen vorgespeichert ist, wobei die verschiedenen Trajektorien verschiedene Schieberichtungen und verschiedene Schiebepfade aufweisen, und wobei sich die zweite Schnittstellenschicht oberhalb der ersten Schnittstellenschicht befindet und der Suchbereich zum Auslösen einer Informationssuchfunktion verwendet wird;
ein Bestimmungsmodul (802), das dazu ausgebildet ist, als Reaktion auf das Erfassen eines Schiebevorgangs in der spezifizierten Schnittstelle, einen Ziel-Informationsanzeigebereich zu bestimmen, der dem Schiebevorgang entspricht, basierend auf einer Trajektorie des Schiebevorgangs und der Entsprechung, wobei das Anzeigemodul (801) ferner dazu ausgebildet ist, eine Detailschnittstelle, die mit dem Ziel-Informationsanzeigebereich verbunden ist, durch die erste Schnittstellenschicht anzuzeigen, während ein Anzeigezustand der zweiten Schnittstellenschicht beibehalten wird; und
Erfassen, wenn eine Suchanweisung auf der Grundlage des Suchbereichs empfangen wird, einer Suchergebnisschnittstelle gemäß den in der ersten Schnittstellenschicht angezeigten Informationen, und Anzeigen der Suchergebnisschnittstelle durch die zweite Schnittstellenschicht,
wobei die Detailschnittstelle in mehreren Seiten angezeigt werden soll, wobei die Detailschnittstelle einen ersten Bereich und einen zweiten Bereich aufweist, und wobei das Anzeigemodul (801) ferner für Folgendes ausgebildet ist:
Schieben, als Reaktion auf das Erkennen eines dritten Schiebevorgangs in dem ersten Bereich, der Detailschnittstelle entsprechend dem dritten Schiebevorgang nach oben und unten; und
Anzeigen, als Reaktion auf das Erkennen eines vierten Schiebevorgangs in dem zweiten Bereich, der spezifizierten Schnittstelle.

6. Vorrichtung nach Anspruch 5, wobei:
das Bestimmungsmodul (802) dazu ausgebildet ist, als Reaktion auf das Erkennen eines ersten Schiebevorgangs, einen ersten Informationsanzeigebereich anzuzeigen, der dem ersten Schiebevorgang entspricht, wobei der erste Informationsanzeigebereich zur Anzeige einer Funktionsoption verwendet wird; und
das Anzeigemodul (801) dazu ausgebildet ist, eine erste Detailschnittstelle anzuzeigen, die mit dem ersten Informationsanzeigebereich verbunden ist, wobei eine Anzahl von Funktionsoptionen in der ersten Detailschnittstelle größer ist als eine Anzahl von Funktionsoptionen in dem ersten Informationsanzeigebereich.

7. Vorrichtung nach Anspruch 5, wobei:
das Bestimmungsmodul (802) dazu ausgebildet ist, als Reaktion auf das Erkennen eines zweiten Schiebevorgangs, einen zweiten Informationsanzeigebereich zu bestimmen, der dem zweiten Schiebevorgang entspricht, wobei der zweite Informationsanzeigebereich zur Anzeige von dynamischen Informationen verwendet wird; und
das Anzeigemodul (801) dazu ausgebildet ist, eine zweite Detailschnittstelle anzuzeigen, die mit dem zweiten Informationsanzeigebereich verbunden ist, wobei die dynamischen Informationen in der zweiten Detailschnittstelle mehr sind als die dynamischen Informationen in dem zweiten Informationsanzeigebereich.

8. Vorrichtung nach Anspruch 5, wobei:
das Anzeigemodul (801) ferner dazu ausgebildet ist, die spezifizierte Schnittstelle als Reaktion auf das Erkennen einer zweiten Gestenbedienung in der Detailschnittstelle anzuzeigen; oder
das Anzeigemodul (801) ferner dazu ausgebildet ist, die spezifizierte Schnittstelle als Reaktion auf das Erkennen eines Bestätigungsvorgangs, der einer Rückkehroption entspricht, anzuzeigen, wobei die Rückkehroption in der Detailschnittstelle enthalten ist.

9. Computerlesbares Speichermedium, auf dem mindestens eine Anweisung gespeichert ist, wobei die mindestens eine Anweisung so ausgebildet ist, dass sie, wenn sie geladen und von einem oder mehreren Prozessoren ausgeführt wird, Vorgänge implementiert, die in dem Schnittstellenanzeigeverfahren nach einem der Ansprüche 1-4 durchgeführt werden.

## Revendications

1. Procédé mis en œuvre par ordinateur de traitement d'interface, comprenant les étapes consistant à :
afficher (101, 201, 601) une interface spécifiée par l'intermédiaire d'une première couche d'interface, l'interface spécifiée étant appelée par une opération de glissement vers la droite effectuée sur une interface principale et comprenant de multiples zones d'affichage d'informations, dans lequel l'interface principale est une interface affichée automatiquement lorsqu'un dispositif électronique est activé ou déverrouillé, une correspondance entre des trajectoires différentes d'opérations de glissement et les multiples zones d'affichage d'informations est prémémorisée, et les trajectoires différentes comprennent des directions de glissement différentes et des trajets de glissement différents ;
afficher (601) une zone de recherche par l'intermédiaire d'une seconde couche d'interface, dans lequel la seconde couche d'interface est située au-dessus de la première couche d'interface et la zone de recherche est utilisée pour déclencher une fonction de recherche d'informations ;
déterminer (102, 202), en réponse à la détection d'une opération de glissement dans l'interface spécifiée, une zone d'affichage d'informations cible correspondant à l'opération de glissement sur la base d'une trajectoire de l'opération de glissement et de la correspondance, et afficher (103, 203, 602), par l'intermédiaire de la première couche d'interface, une interface de détail associée à la zone d'affichage d'informations cible tout en maintenant un état d'affichage de la seconde couche d'interface ; et
acquérir (603), lorsqu'une instruction de recherche est reçue sur la base de la zone de recherche, une interface de résultat de recherche conformément à des informations affichées dans la première couche d'interface, et
afficher (604) l'interface de résultat de recherche par l'intermédiaire de la seconde couche d'interface,
dans lequel l'interface de détail doit être affichée dans de multiples pages, l'interface de détail comprend une première zone et une seconde zone, et le procédé comprend en outre les étapes consistant à :
glisser vers le haut et vers le bas, en réponse à la détection d'une troisième opération de glissement dans la première zone, l'interface de détail conformément à la troisième opération de glissement ; et
afficher, en réponse à la détection d'une quatrième opération de glissement dans la seconde zone, l'interface spécifiée.

2. Procédé selon la revendication 1, dans lequel l'étape de détermination (102, 202), en réponse à la détection de la première opération gestuelle dans l'interface spécifiée, de la zone d'affichage d'informations cible correspondant à la première opération gestuelle, et l'étape d'affichage (103, 203, 602) de l'interface de détail associée à la zone d'affichage d'informations cible, consistent à :
déterminer, en réponse à la détection d'une première opération de glissement, une première zone d'affichage d'informations correspondant à la première opération de glissement, la première zone d'affichage d'informations étant utilisée pour afficher une option de fonction ; et
afficher une première interface de détail associée à la première zone d'affichage d'informations, un nombre d'options de fonction dans la première interface de détail étant supérieur à un nombre d'options de fonction dans la première zone d'affichage d'informations.

3. Procédé selon la revendication 1, dans lequel l'étape de détermination (102, 202), en réponse à la détection de la première opération gestuelle dans l'interface spécifiée, de la zone d'affichage d'informations cible correspondant à la première opération gestuelle, et l'étape d'affichage (103, 203, 602) de l'interface de détail associée à la zone d'affichage d'informations cible, consistent à :
déterminer, en réponse à la détection d'une deuxième opération de glissement, une seconde zone d'affichage d'informations correspondant à la deuxième opération de glissement, la seconde zone d'affichage d'informations étant utilisée pour afficher des informations dynamiques ; et
afficher une seconde interface de détail associée à la seconde zone d'affichage d'informations, les informations dynamiques dans la seconde interface de détail étant plus nombreuses que les informations dynamiques dans la seconde zone d'affichage d'informations.

4. Procédé selon la revendication 1, comprenant en outre l'étape consistant à :
afficher (204) l'interface spécifiée en réponse à la détection d'une seconde opération gestuelle dans l'interface de détail ; ou
afficher (205) l'interface spécifiée en réponse à la détection d'une opération de confirmation correspondant à une option de retour, l'option de retour étant comprise dans l'interface de détail.

5. Dispositif d'affichage d'interface, comprenant :
un module d'affichage (801), configuré pour afficher une interface spécifiée par l'intermédiaire d'une première couche d'interface, l'interface spécifiée étant appelée par une opération de glissement vers la droite effectuée sur une interface principale et comprenant de multiples zones d'affichage d'informations, et afficher une zone de recherche par l'intermédiaire d'une seconde couche d'interface, dans lequel l'interface principale est une interface affichée automatiquement lorsqu'un dispositif électronique est activé ou déverrouillé, une correspondance entre des trajectoires différentes d'opérations de glissement et les multiples zones d'affichage d'informations est prémémorisée, les trajectoires différentes comprennent des directions de glissement différentes et des trajets de glissement différents, et la seconde couche d'interface est située au-dessus de la première couche d'interface et la zone de recherche est utilisée pour déclencher une fonction de recherche d'informations ;
un module de détermination (802), configuré pour déterminer, en réponse à la détection d'une opération de glissement dans l'interface spécifiée, une zone d'affichage d'informations cible correspondant à l'opération de glissement sur la base d'une trajectoire de l'opération de glissement et de la correspondance,
dans lequel le module d'affichage (801) est en outre configuré pour afficher, par l'intermédiaire de la première couche d'interface, une interface de détail associée à la zone d'affichage d'informations cible tout en maintenant un état d'affichage de la seconde couche d'interface ; et
acquérir, lorsqu'une instruction de recherche est reçue sur la base de la zone de recherche, une interface de résultat de recherche conformément à des informations affichées dans la première couche d'interface, et
afficher l'interface de résultat de recherche par l'intermédiaire de la seconde couche d'interface,
dans lequel l'interface de détail doit être affichée dans de multiples pages, l'interface de détail comprend une première zone et une seconde zone, et le module d'affichage (801) est en outre configuré pour :
glisser vers le haut et vers le bas, en réponse à la détection d'une troisième opération de glissement dans la première zone, l'interface de détail conformément à la troisième opération de glissement ; et
afficher, en réponse à la détection d'une quatrième opération de glissement dans la seconde zone, l'interface spécifiée.

6. Dispositif selon la revendication 5, dans lequel,
le module de détermination (802) est configuré pour déterminer, en réponse à la détection d'une première opération de glissement, une première zone d'affichage d'informations correspondant à la première opération de glissement, la première zone d'affichage d'informations étant utilisée pour afficher une option de fonction ;
le module d'affichage (801) est configuré pour afficher une première interface de détail associée à la première zone d'affichage d'informations, un nombre d'options de fonction dans la première interface de détail étant supérieur à un nombre d'options de fonction dans la première zone d'affichage d'informations.

7. Dispositif selon la revendication 5, dans lequel,
le module de détermination (802) est configuré pour déterminer, en réponse à la détection d'une deuxième opération de glissement, une seconde zone d'affichage d'informations correspondant à la deuxième opération de glissement, la seconde zone d'affichage d'informations étant utilisée pour afficher des informations dynamiques ; et
le module d'affichage (801) est configuré pour afficher une seconde interface de détail associée à la seconde zone d'affichage d'informations, les informations dynamiques dans la seconde interface de détail étant plus nombreuses que les informations dynamiques dans la seconde zone d'affichage d'informations.

8. Dispositif selon la revendication 5, dans lequel,
le module d'affichage (801) est en outre configuré pour afficher l'interface spécifiée en réponse à la détection d'une seconde opération gestuelle dans l'interface de détail ; ou
le module d'affichage (801) est en outre configuré pour afficher l'interface spécifiée en réponse à la détection d'une opération de confirmation correspondant à une option de retour, l'option de retour étant comprise dans l'interface de détail.

9. Support d'informations lisible par ordinateur maintenant au moins une instruction, l'au moins une instruction étant configurée pour, lorsqu'elle est chargée et exécutée par un ou plusieurs processeurs, effectuer des opérations mises en œuvre dans le procédé d'affichage d'interface selon l'une quelconque des revendications 1 à 4.
